**Europäisches Patentamt**

**European Patent Office**

**Office européen des brevets**

(11) Veröffentlichungsnummer: **0 039 436**
A1

(12) ## EUROPÄISCHE PATENTANMELDUNG

(21) Anmeldenummer: 81102960.2

(22) Anmeldetag: 16.04.81

(51) Int. Cl.³: **H 02 K 3/48**, H 02 K 3/40

(30) Priorität: 02.05.80 DE 3016990

(43) Veröffentlichungstag der Anmeldung: 11.11.81
Patentblatt 81/45

(84) Benannte Vertragsstaaten: **CH FR GB LI**

(71) Anmelder: **KRAFTWERK UNION AKTIENGESELLSCHAFT**, Wiesenstrasse 35, D-4330 Mülheim (Ruhr) (DE)

(72) Erfinder: **Lambrecht, Dietrich, Dipl.-Ing.,** Rathenaustrasse 11, D-4330 Mülheim (Ruhr) (DE)

(74) Vertreter: **Mehl, Ernst, Dipl.-Ing. et al**, Postfach 22 01 76, D-8000 München 22 (DE)

(54) **Vorrichtung zum Fixieren von Wicklungsstäben in Nuten elektrischer Maschinen, insbesondere Turbogeneratoren.**

(57) Die Erfindung bezieht sich auf eine Vorrichtung zur Fixierung von Wicklungsstäben (3, 4) in Nuten (1) elektrischer Maschinen, mit einem im Bereich der Nutöffnung angeordneten Nutverschlußkeil (10) sowie mindestens einer in Längsrichtung der Nut (1) verlaufenden und gewellten Nutverschlußfeder (13). Um das Langzeitverhalten der bei ihrem Einbau in die Nut (1) um etwa 80% ihres Federweges zusammengedrückten Nutverschlußfeder (13) zu verbessern, ist erfindungsgemäß vorgesehen, daß zwischen einer Flanke des Wicklungsstabes (3, 4) und der benachbarten Nutseitenwand mindestens eine in Längsrichtung der Nut (1) verlaufende und gewellte Nutseitenfeder (14, 15) aus einem in einem aushärtbaren Harz eingebetteten Glasgewebe angeordnet ist, welche Nutseitenfeder (14, 15) bei ihrem Einbau in die Nut (1) um mindestens 85% ihres Federweges zusammengedrückt ist. Die durch die Nutseitenfeder (14, 15) an der Nutseitenwand hervorgerufenen Reibungskräfte verringern die dynamische Beanspruchung der Nutverschlußfeder (13).

EP 0 039 436 A1

COMPLETE DOCUMENT

KRAFTWERK UNION AKTIENGESELLSCHAFT
Mülheim a. d. Ruhr

0039436

Unser Zeichen
VPA 80 P 9454 E

**Vorrichtung zum Fixieren von Wicklungsstäben in Nuten elektrischer Maschinen, insbesondere Turbogeneratoren**

Die Erfindung bezieht sich auf eine Vorrichtung zur Fixierung von Wicklungsstäben in Nuten elektrischer Maschinen, insbesondere Turbogeneratoren, mit mindestens einem Wicklungsstab je Nut und im Bereich der Nutöffnung angeordnetem Nutverschlußkeil sowie mindestens einer in Längsrichtung der Nut verlaufenden und gewellten Nutverschlußfeder aus einem in einem aushärtbaren Harz eingebetteten Glasgewebe, welche Nutverschlußfeder bei ihrem Einbau in die Nut um etwa 80 % ihres Federweges zusammengedrückt ist.

Eine derartige Vorrichtung ist aus der DE-AS 21 65 727 bereits bekannt. Dadurch, daß die Nutverschlußfeder bei ihrem Einbau um etwa 80 % ihres Federweges zusammengedrückt ist, steht bei der bekannten Vorrichtung fast der gesamte Federweg zur Verfügung, um Setzerscheinungen der Nutfüllung zu kompensieren. Somit ergibt sich eine dauernd ausreichende Vorspannkraft der Nutverschlußfeder, durch welche auch nach längerer Zeit noch ein radiales Spiel der Wicklungsstäbe in der Nut und insbesondere ein Abheben vom Nutgrund verhindert wird. Andererseits führt aber die hohe Vorspannung der Nutverschlußfeder zu einer hohen Beanspruchung, da der durch die Vorspannung erzeugten Beanspruchung zusätzlich auch noch eine durch die mit doppelter Betriebsfrequenz pulsierenden Stabkräfte hervorgerufene Schwingungsbeanspruchung überlagert wird. Die von der Nutverschlußfeder auf Dauer ertragbare Schwingungsamplitude nimmt hierbei mit steigender Vorspannung ab. Dieser Abhängigkeit des Dauerfestigkeitsverhaltens der Nutverschlußfeder von

Klk 2 Fl/31.3.1980

0039436

der Vorspannung und der Schwingungsamplitude kommt mit zunehmender Einheitenleistung dynamoelektrischer Maschinen und damit steigenden Stabströmen eine erhöhte Bedeutung zu, da die Stabkräfte mit dem Quadrat der Stabströme wachsen. Außerdem erfordern höhere Stabkräfte entweder die Verwendung von dickeren Nutverschlußfedern oder den Einsatz von zwei oder mehreren übereinander angeordneten Nutverschlußfedern. Beide Maßnahmen wirken sich ebenfalls negativ auf die Lebensdauer der Nutverschlußfedern aus, da bei dickeren Nutverschlußfedern die Schubkräfte steigen und bei übereinander angeordneten Nutverschlußfedern Verschleißerscheinungen auftreten.

Der Erfindung liegt somit die Aufgabe zugrunde, die bekannte Vorrichtung so zu verbessern, daß auch bei sehr hohen Stabkräften eine lange Lebensdauer der Nutverschlußfedern gewährleistet ist.

Diese Aufgabe wird bei einer Vorrichtung der eingangs genannten Art erfindungsgemäß dadurch gelöst, daß zwischen einer Flanke des Wicklungsstabes und der benachbarten Nutseitenwand mindestens eine in Längsrichtung der Nut verlaufende und gewellte Nutseitenfeder aus einem in einem aushärtbaren Harz eingebetteten Glasgewebe angeordnet ist, welche Nutseitenfeder bei ihrem Einbau in die Nut um mindestens 85 % ihres Federweges zusammengedrückt ist.

Aus der FR-PS 13 07 821 ist es bereits bekannt, gewellte Nutseitenfedern aus einem isolierenden Material als alleiniges Mittel zur Fixierung von Wicklungsstäben zu verwenden. Ein Hinweis auf eine kombinierte Verwendung von Nutverschlußfedern und Nutseitenfedern ist dieser Druckschrift jedoch nicht zu entnehmen.

Bei der erfindungsgemäßen Vorrichtung ergibt sich demgegenüber bei Einhaltung der für den Einbau angegebenen

0039436

Dimensionierungsregeln ein funktionelles Zusammenwirken von Nutverschlußfeder und Nutseitenfeder, durch welches die Dauerfestigkeit der Nutverschlußfeder wesentlich erhöht wird. Dies ist darauf zurückzuführen, daß durch die Vorspannkraft der Nutseitenfeder an der Nutseitenwand eine Reibungskraft hervorgerufen wird, welche die in radialer Richtung wirkenden pulsierenden Stabkräfte teilweise kompensiert und die von der Nutverschlußfeder zu ertragende Schwingungsamplitude verringert. Das Problem einer ausreichend langen Lebensdauer wird hierdurch aber keineswegs von der Nutverschlußfeder auf die Nutseitenfeder übertragen, obwohl die Nutseitenfeder zur Kompensation von Setzerscheinungen beim Einbau um mindestens 85 % ihres Federweges zusammengedrückt ist. Dieser durch die Vorspannung der Nutseitenfeder erzeugten Beanspruchung wird nämlich nur eine relativ geringe Schwingungsbeanspruchung überlagert, da die pulsierenden Stabkräfte in tangentialer Richtung nur etwa 5 bis 10 % der pulsierenden Stabkräfte in radialer Richtung ausmachen.

Bei einer bevorzugten Ausgestaltung der erfindungsgemäßen Vorrichtung ist dem aushärtbaren Harz der Nutseitenfeder ein elektrisch leitendes Pigment beigemengt; hierdurch erhält die Nutseitenfeder halbleitende Eigenschaften, so daß eventuelle Glimmentladungen zwischen den Wicklungsstäben und der Nutseitenwand von vornherein vermieden werden.

Bei einer weiteren Ausgestaltung der erfindungsgemäßen Vorrichtung sind die Wellen der Nutseitenfeder schräg - vorzugsweise unter einem Winkel von etwa 45° - zur Längsrichtung der Nut ausgerichtet. Hierdurch ergibt sich ein diagonaler Wellenverlauf mit einer gleichmäßigeren Verteilung der auf die Wicklungsstäbe und die Nutseitenwand gerichteten Federkräfte.

Vorzugsweise ist die Nutseitenfeder in Längsrichtung der Nut unterteilt eingebaut. Durch ein derartiges abschnittsweises Einbringen der Nutseitenfeder wird der Einbau wesentlich erleichtert.

Anhand einer schematischen Zeichnung sind Aufbau und Wirkungsweise eines Ausführungsbeispiels nach der Erfindung näher erläutert. Dabei zeigt:

Fig. 1 einen Querschnitt durch eine Nut, in die eine Nutverschlußfeder und eine Nutseitenfeder eingelegt sind,

Fig. 2 einen perspektivischen Teillängs- und Querschnitt der Nut,

Fig. 3 den diagonalen Wellenverlauf der Nutseitenfeder,

Fig. 4 den funktionellen Zusammenhang zwischen den Stabkräften und den durch Nutverschlußfeder und Nutseitenfeder hervorgerufenen Kräften,

Fig. 5 die Federkennlinie der Nutseitenfeder und

Fig. 6 die Federkennlinie der Nutverschlußfeder.

In die Nut 1 des Ständerblechpaketes 2 sind nach dem vorliegenden Ausführungsbeispiel zwei Wicklungsstäbe 3 und 4 übereinander angeordnet. Diese beiden Wicklungsstäbe 3 und 4 sind untereinander gleich aufgebaut und bestehen aus versetzt angeordneten Massivleitern 5 und entsprechenden Hohlleitern 6 zur Kühlung der Wicklung. Die einzelnen Leiterebenen sind hierbei durch eine Lagenisolation 7 voneinander getrennt und insgesamt von einer Isolierung 8 umschlossen. Zwischen den beiden Stäben 3 und 4 ist eine Nutenzwischenlage 9 vorgesehen, während die Nut 1 am oberen Ende durch einen Nutverschlußkeil 10 abgeschlossen wird, der nach Art einer

0039436

Schwalbenschwanzverbindung in Ausnehmungen der Nutflanken eingeschoben ist.

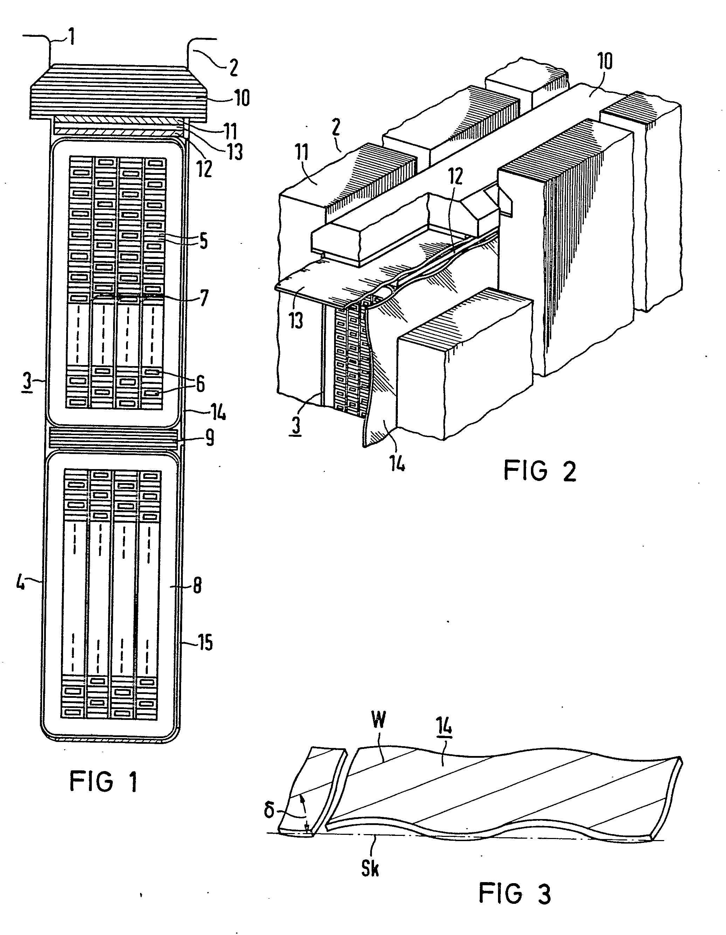

Zur radialen Verspannung der beiden Wicklungsstäbe 3 und 4 ist unterhalb des Nutverschlußkeils 10 zwischen dem Rutschstreifen 11 und dem Deckschieber 12 eine Nutverschlußfeder 13 angeordnet, welche die Gestalt einer in Längsrichtung gewellten Blattfeder besitzt. Zur tangentialen Verspannung der beiden Wicklungsstäbe 3 und 4 sind zwischen den Stabflanken und der Nutseitenwand auf einer Seite Nutseitenfedern 14 und 15 angeordnet, wobei die Nutseitenfeder 14 dem Wicklungsstab 3 und die Nutseitenfeder 15 dem Wicklungsstab 4 zugeordnet ist. Die beiden Nutseitenfedern 14 und 15 besitzen ebenfalls die Gestalt einer gewellten Blattfeder, wobei der Wellenverlauf zur Erzielung einer gleichmäßigeren Kraftübertragung aber nicht parallel oder senkrecht, sondern diagonal unter einem Winkel von $45^\circ$ zur Längsrichtung der Nut 1 ausgerichtet ist. Wie insbesondere aus der Darstellung der Nutseitenfeder 14 nach Fig. 3 zu ersehen ist, wird dieser diagonale Wellenverlauf dadurch erreicht, daß beim Ausschneiden aus einer größeren Tafel die Schnittkante Sk unter einem Winkel von $\delta = 45^\circ$ zum Wellenverlauf W ausgerichtet wird.

Fig. 4 zeigt in stark vereinfachter schematischer Darstellung die im Bereich der Nutfüllung wirkenden Kräfte. Hierbei ist mit $F_B$ die durch Stromkräfte hervorgerufene und in Richtung auf den Grund der Nut 1 wirkende pulsierende Stabkraft, mit $F_{NV}$ die in radialer Richtung wirkende Vorspannkraft der Nutverschlußfeder 13 und mit $F_{NF}$ die in tangentialer Richtung wirkende Vorspannkraft der Nutseitenfedern 14 bzw. 15 bezeichnet. Die tangential gerichtete Vorspannkraft $F_{NS}$ bewirkt neben einer tangentialen Verspannung durch die Reibung an der Nutseitenwand eine radial gerichtete Reibungskraft $F_R$, welche der pulsierenden Stabkraft $F_B$ stets entgegengesetzt ist.

Umgekehrt bewirkt die radiale Vorspannkraft $F_{NV}$ eine tangential gerichtete Reibkraft an den Stäben, die pulsierende Anregungen in tangentialer Richtung dämpft und damit die Nutseitenfedern vor Schwingungsbeanspruchung schützt.

In dem Diagramm nach Fig. 5 ist die Federkennlinie einer Nutseitenfeder dargestellt. Diese Kennlinie stellt den Zusammenhang zwischen der Federkraft $F_{NS}$ und dem relativen Federweg $s_{NS}$ dar, wobei der max. mögliche Federweg $s_{NS}$ mit 100 % bezeichnet ist. Die dargestellte Kennlinie verläuft bis etwa 70 % des relativen Federweges $s_{NS}$ angenähert linear und nimmt dann einen in bezug auf die Federkraft $F_{NS}$ degressiv abflachenden Verlauf an. Eine derartige Federcharakteristik wird erreicht durch ein mit Harz imprägniertes, gehärtetes und unidirektionales Glasgewebe, bei dem die Faserstränge quer zu den Wellen etwa 15 x schwerer sind als die parallel zu den Wellen verlaufenden Faserstränge. Die Nutseitenfeder wird beim Einbau auf mindestens 85 % ihres relativen Federweges $s_{NS}$ zusammengedrückt und erzeugt hierbei eine Vorspannkraft $F_{1NS}$ (Punkt 1NS der Kennlinie). Tritt im Laufe des Betriebes, beispielsweise im Laufe vieler Jahre, ein tangentialer Setzbetrag $\Delta s_{NS}$ in der Nutfüllung auf, so entspannt sich die Nutseitenfeder um diesen Betrag und erzeugt hierbei eine Vorspannkraft $F_{2NS}$ (Punkt 2NS der Kennlinie). Diese Vorspannkraft $F_{2NS}$ ist immer noch so groß , daß einerseits eine sichere Fixierung der Nutfüllung gewährleistet ist und andererseits eine zur Lebensdauerverlängerung der Nutverschlußfeder ausreichend hohe radiale Reibungskraft $F_R$ (Fig. 4) erzielt wird.

In dem Diagramm nach Fig. 6 ist die Federkennlinie einer Nutverschlußfeder dargestellt. Diese Kennlinie stellt den Zusammenhang zwischen der Federkraft $F_{NV}$ und dem relativen Federweg $s_{NV}$ dar, wobei der max. mögliche

0039436

Federweg $s_{NV}$ mit 100 % bezeichnet ist. Die dargestellte Kennlinie verläuft bis etwa 70 % des relativen Federweges $s_{NS}$ angenähert linear und nimmt dann einen in bezug auf die Federkraft $F_{NS}$ degressiv abflachenden Verlauf an. Eine derartige Federcharakteristik wird erreicht durch ein mit Harz imprägniertes, gehärtetes und unidirektionales Glasgewebe, bei dem die Faserstränge quer zu den Wellen etwa 15 x schwerer sind als die parallel zu den Wellen verlaufenden Faserstränge. Die Nutverschlußfeder wird beim Einbau auf mindestens 80 % ihres relativen Federweges $s_{NV}$ zusammengedrückt und erzeugt hierbei eine Vorspannkraft $F_{1NV}$ (Punkt 1NV der Kennlinie). Tritt im Laufe des Betriebes, beispielsweise im Laufe vieler Jahre, ein radialer Setzbetrag $\Delta s_{NV}$ in der Nutfüllung auf, so entspannt sich die Nutseitenfeder um diesen Betrag und erzeugt hierbei eine Vorspannkraft $F_{2NV}$ (Punkt 2NV der Kennlinie). Diese Vorspannkraft $F_{2NV}$ ist immer noch so groß, daß ein Abheben des Wicklungsstabes vom Nutgrund und damit ein Hämmern verhindert wird. Dies setzt aber voraus, daß die Nutverschlußfeder zu diesem Zeitpunkt noch die dargestellte Kennlinie aufweist und nicht durch Ermüdungserscheinungen beeinträchtigt ist. Derartige Ermüdungserscheinungen könnten nämlich durch die Vorspannkraft $F_{NV}$ überlagerte und durch die pulsierenden Stabkräfte $F_B$ erzeugte Schwingungsbeanspruchung hervorgerufen werden. Die der Vorspannkraft $F_{1NV}$ überlagerte pulsierende Stabkraft $\Delta F_B$ würde ohne zusätzlich eingebaute Nutseitenfeder eine Schwingungsamplitude $\Delta s_V$ hervorrufen, während mit der zusätzlich eingebauten Nutseitenfeder die bereits geschilderte Reibungskraft $F_R$ der pulsierenden Stabkraft $\Delta F_B$ entgegenwirkt und eine wesentlich geringere Schwingungsamplitude $\Delta s_{VR}$ hervorgerufen wird. Durch den zusätzlichen Einbau der Nutseitenfeder wird somit also das Langzeitverhalten der Nutverschlußfeder wesentlich verbessert.

6 Figuren
5 Patentansprüche

Patentansprüche

1. Vorrichtung zur Fixierung von Wicklungsstäben in Nuten elektrischer Maschinen, insbesondere Turbogeneratoren, mit mindestens einem Wicklungsstab je Nut und im Bereich der Nutöffnung angeordnetem Nutverschlußkeil sowie mindestens einer in Längsrichtung der Nut verlaufenden und gewellten Nutverschlußfeder aus einem in einem aushärtbaren Harz eingebetteten Glasgewebe, welche Nutverschlußfeder bei ihrem Einbau in die Nut um etwa 80 % ihres Federweges zusammengedrückt ist, d a d u r c h   g e k e n n z e i c h n e t, daß zwischen einer Flanke des Wicklungsstabes (3, 4) und der benachbarten Nutseitenwand mindestens eine in Längsrichtung der Nut (1) verlaufende und gewellte Nutseitenfeder (14, 15) aus einem in einem aushärtbaren Harz eingebetteten Glasgewebe angeordnet ist, welche Nutseitenfeder (14, 15) bei ihrem Einbau in die Nut (1) um mindestens 85 % ihres Federweges ($s_{NS}$) zusammengedrückt ist.

2. Vorrichtung nach Anspruch 1, d a d u r c h   g e k e n n z e i c h n e t, daß dem aushärtbaren Harz der Nutseitenfeder (14, 15) ein elektrisch leitendes Pigment beigemengt ist.

3. Vorrichtung nach Anspruch 1 oder 2, d a d u r c h   g e k e n n z e i c h n e t, daß die Wellen (W) der Nutseitenfeder (14, 15) schräg zur Längsrichtung der Nut (1) ausgerichtet sind.

4. Vorrichtung nach Anspruch 3, d a d u r c h   g e k e n n z e i c h n e t, daß die Wellen (W) der Nutseitenfeder (14, 15) unter einem Winkel ($\delta$) von etwa 45° zur Längsrichtung der Nut (1) ausgerichtet sind.

0039436

5. Vorrichtung nach einem der vorhergehenden Ansprüche, dadurch gekennzeichnet, daß die Nutseitenfeder (14, 15) in Längsrichtung der Nut (1) unterteilt eingebaut ist.

FIG 1

FIG 2

FIG 3

| Kategorie | **EINSCHLÄGIGE DOKUMENTE** | | KLASSIFIKATION DER ANMELDUNG (Int. Cl.³) |
|---|---|---|---|
| | Kennzeichnung des Dokuments mit Angabe, soweit erforderlich, der maßgeblichen Teile | betrifft Anspruch | |
| | <u>GB - A - 1 135 242</u> (ELECTRICAL INDUSTRIES) <br> * Seite 2, Zeilen 1-20 * <br> -- | 1 | H 02 K 3/48 <br> 3/40 |
| | <u>US - A - 3 444 407</u> (YATES) <br> * Spalte 1, Zeilen 9-22; Figur 3 * <br> -- | 1 | |
| | <u>GB - A - 733 718</u> (ENGLISH ELECTRIC) <br> * Seite 2, Zeilen 38-50; Figur 1 * <br> -- | 1 | RECHERCHIERTE SACHGEBIETE (Int. Cl.³) |
| | <u>DE - A - 1 963 179</u> (ASEA) <br> * Seite 5, Zeile 24 - Seite 6, Zeile 11 * <br> -- | 1 | H 02 K 3/48 <br> 3/40 <br> 3/487 <br> 3/46 <br> 3/493 |
| D | <u>FR - A - 1 307 821</u> (THOMSON-HOUSTON) <br> * Seite 2, linke Spalte, Zeilen 50-55 * <br> -- | 1 | |
| | <u>US - A - 4 008 409</u> (RHUDY) <br> * Spalte 4, Zeile 60 - Spalte 5, Zeile 52; Figur 2 * <br> -- | 2 | **KATEGORIE DER GENANNTEN DOKUMENTE** <br> X: von besonderer Bedeutung <br> A: technologischer Hintergrund <br> O: nichtschriftliche Offenbarung <br> P: Zwischenliteratur <br> T: der Erfindung zugrunde liegende Theorien oder Grundsätze |
| | <u>US - A - 4 095 627</u> (LONSETH) <br> * Spalte 2, Zeilen 26-58; Figur 3 * <br> -- ./. | 2 | E: kollidierende Anmeldung <br> D: in der Anmeldung angeführtes Dokument <br> L: aus andern Gründen angeführtes Dokument <br> &: Mitglied der gleichen Patentfamilie, übereinstimmendes Dokument |

Der vorliegende Recherchenbericht wurde für alle Patentansprüche erstellt.

| Recherchenort | Abschlußdatum der Recherche | Prüfer |
|---|---|---|
| Den Haag | 03-07-1981 | RANDES |

EPA form 1503.1 06.78

Europäisches
Patentamt

**EUROPÄISCHER RECHERCHENBERICHT**

0039436

Nummer der Anmeldung

EP 81 10 2960
-2-

| Kategorie | Kennzeichnung des Dokuments mit Angabe, soweit erforderlich, der maßgeblichen Teile | betrifft Anspruch | KLASSIFIKATION DER ANMELDUNG (Int.Cl. ³) |
|---|---|---|---|
| | **EINSCHLÄGIGE DOKUMENTE** | | |
| | DE - A - 1 613 236 (LICENTIA)<br>* Seite 5, Zeilen 20-28 *<br><br>-- | 3 | |
| | GB - A - 1 430 756 (REYROLLE)<br>* Seite 2, Zeilen 14-24; Figur 2 *<br><br>-- | 5 | |
| | DE - A - 2 358 367 (BROWN BOVERI)<br>* Seite 9, Zeilen 1-14; Figur 2 *<br><br>-- | 5 | RECHERCHIERTE SACHGEBIETE (Int. Cl. ³) |
| A | US - A - 3 679 926 (SIMMONDS) | 2 | |
| A | US - A - 3 824 683 (RHUDY) | 2 | |
| A | CH - A - 433 494 (GENERAL ELEC-TRIC) | | |
| A | DE - A - 2 123 520 (LICENTIA) | | |
| A | DE - B - 1 119 999 (VEB) | | |
| DA | DE - B - 2 165 727 (KRAFTWERK)<br><br>---- | | |